# EUROPÄISCHE PATENTSCHRIFT

(11) **EP 0 752 359 B1**
(45) Veröffentlichungstag und Bekanntmachung des Hinweises auf die Patenterteilung: **21.04.1999**
(21) Anmeldenummer: 96108303.7
(22) Anmeldetag: 24.05.1996
(51) Int. Cl.: B62D 1/19

(54) **Längsverstellvorrichtung an einem Mantelrohrteleskop einer Lenkspindel in einem Kraftfahrzeug**
Longitudinal adjusting arrangement for a telescopic tubular jacket of a steering shaft of a motor vehicle
Mécanisme de déplacement longitudinal pour une enveloppe tubulaire téléscopique d'un arbre de direction d'un véhicule automobile

(30) Priorität: 03.07.1995 DE 19524196
(43) Veröffentlichungstag der Anmeldung: 08.01.1997
(73) Patentinhaber: DaimlerChrysler AG, 70567 Stuttgart (DE)
(72) Erfinder: Peitsmeier, Karl, 71686 Aldingen (DE); Patzelt, Helmut, 71394 Kernen (DE)

(56) Entgegenhaltungen:
- DE-A- 3 229 481
- FR-A- 2 633 579
- GB-A- 1 445 895

## Beschreibung

Die Erfindung betrifft eine Längsverstellvorrichtung an einem Mantelrohrteleskop einer Lenkspindel in einem Kraftfahrzeug gemäß dem Oberbegriff des Anspruchs 1.

Aus der DE 32 29 481 C2, die im Oberbegriff des Anspruchs 1 berücksichtigt ist, ist eine Längsverstellvorrichtung an einem Mantelrohrteleskop einer Lenkspindel in einem Kraftfahrzeug bekannt, bei der zwischen den Teleskopabschnitten eines Mantelrohrs ein Spindeltrieb wirkt, durch den das Mantelrohr in der Länge veränderbar ist, und damit ein Lenkrad im Fahrzeuginnenraum mehr auf den Fahrer zu oder von im weg eingestellt werden kann. Die in Längsrichtung des Mantelrohrs eingeleiteten Kräfte werden über den Eingriff des Spindelgewindes in das Gewinde der Mutter von einem Teleskopabschnitt in den anderen Teleskopabschnitt weitergeleitet. Damit das Lenkrad auch bei starker Belastung nicht aus der Position verschoben werden kann, ist der Formschluß im Gewindeeingriff sehr stabil ausgebildet. Grundsätzlich soll aber bei einem Fahrzeugcrash möglichst viel Aufprallenergie, die von beiden Enden in die Lenksäule eingeleitet wird, auch in dieser abgebaut werden, damit eine für den Insassen ungünstige Bewegung der Lenksäule bzw. der Lenkspindel mit dem Lenkrad vermieden werden kann. Hierfür ist in dieser Anordnung nichts vorgesehen.

Auch in der US 4 785 684 ist eine derartige Ausbildung einer Längsverstellvorrichtung beschrieben, wobei aber ebenfalls keine Möglichkeit aufgezeigt ist, Aufprallenergie in einem gattungsgemäßen Mantelrohrteleskop mit einem Spindeltrieb bei einem Crash abzubauen.

Die US 4 691 587 zeigt eine Lenksäule, deren Mantelrohr gegenüber dem Aufbau mittels eines Spindeltriebs verschiebbar ist. Hier wird eine aufwendige Lagerung des Mantelrohrs über den Spindeltrieb am Fahrzeugaufbau gewählt, wobei die möglichen Nachgiebigkeiten zur Energieumwandlung bei einem Crash von einer Vielzahl weiterer Faktoren im Fahrzeugaufbau selbst abhängig sind, die deshalb nicht einfach gesteuert werden können, damit sich daraus die richtige, oder gar keine Bewegung des Lenkrads in den Fahrzeuginnenraum ergäbe. So kann hier durch die Verformung des Aufbaus bei einem Crash bereits eine Verschiebung des Mantelrohrs verursacht werden, die dem Ergebnis der gezielten Verformung widerspricht.

Zum allgemeinen Hintergrund der Längsverstellung an Mantelrohrteleskopen wird noch auf folgende Druckschriften verwiesen: DE 33 18 935 C1 und DE 35 36 285 C1

Die Aufgabe der Erfindung besteht darin, bei einem Mantelrohrteleskop mit einer gattungsgemäßen Längsverstellvorrichtung bei einem Crash Aufprallenergie in der Längsverstellvorrichtung abzubauen.

Die Aufgabe wird durch die kennzeichnenden Merkmale des Patentanspruchs 1 gelöst.

Durch den Energieabbau im Crashfall in der Längsverstellvorrichtung des Mantelrohrteleskops wird weniger Aufprallenergie in der Lenksäule weitergeleitet. Damit wird einer ungünstigen Verschiebung oder Verformung der Lenksäule entgegengewirkt.

Der Spindeltrieb, der für die Abstützung zweier Teleskopabschnitte zueinander zuständig ist, trägt dann, wenn er durch die Krafteinleitung überfordert wird und an einem Teleskopabschnitt nachgebend verlagert wird, zum Energieabbau durch eine gezielte Verformung des einzelnen oder der Energieabsorptionselemente bei.

Ein Energieabsorptionselement wird dort am Spindeltrieb angeordnet, wo bei einem Fahrzeugcrash am frühzeitigsten mit einer Bewegung relativ zum abstützenden Teleskopabschnitt zu rechnen ist, wobei durch Vorausberechnungen und Versuche auch mehrere Stellen bestimmt werden können, wo durch eine im Crashfall verursachte Verschiebung der Gewindespindel und/oder der Spindelmutter zum jeweiligen Teleskopabschnitt ein Energieabsorptionselement energieumwandelnd wirken kann.

Das Energieabsorptionselement kann hierzu aus einem bei diesen Belastungen mit einem vorausbestimmbaren Widerstand nachgiebigen Material gebildet sein. Weiterhin kann auch die Körperform des Energieabsorptionselements für eine gezielte Verformung, wie etwa als gezielt umformbares Rohr, gewählt werden.

Eine einfache Krafteinleitung in ein Energieabsorptionselement kann z.B. dadurch erfolgen, daß die Spindelmutter in Energieabsorptionselementen gelagert ist, welche dann im Crashfall durch die in die Spindelmutter eingeleiteten hohen Kräfte verformt werden, wobei die eingeleitete Aufprallenergie zur Verformung herangezogen wird. Hierfür ist es sinnvoll, daß die Spindelmutter am unverschiebbaren Teleskopabschnitt ortsfest gelagert ist, welcher für das sich verformende Energieabsorptionselement eine sichere Stütze ist.

Die Erfindung ist nachstehend anhand einer Zeichnung näher beschrieben.

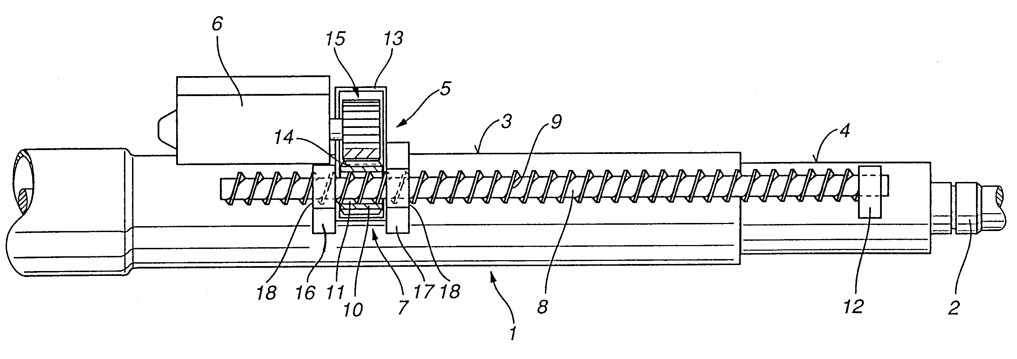

Die Figur zeigt eine Ansicht auf einen Abschnitt eines Mantelrohrs 1 um eine Lenkspindel 2, an die rechts in der Zeichnung ein hier nicht dargestelltes Lenkrad in einem Fahrzeuginnenraum angeflanscht wäre. Das Mantelrohr 1 weist zwei Teleskopabschnitte 3 und 4 auf, durch die die Mantelrohrlänge verändert werden kann, wobei die Lenkspindel 2 bzw. das Lenkrad mit dem verschiebbaren Teleskopabschnitt 4 mitverschoben wird. Damit kann die Position des Lenkrads an die Bedürfnisse eines Fahrers angepaßt werden.

Die Längsverstellvorrichtung 5 für diese Längenänderung des Mantelrohrs umfaßt einen über einen Motor 6 elektrisch angetriebenen Spindeltrieb 7, der eine Gewindespindel 8 mit einem Außengewinde 9 sowie eine damit in Eingriff stehende Spindelmutter 10 mit einem Innengewinde 11 aufweist.

Die langgestreckte Gewindespindel 8 ist an einem Ende am verschiebbaren Teleskopabschnitt 4 dreh- und ortsfest durch eine Befestigung 12 festgelegt. Die Befestigung 12 ist bei einem weiteren, nicht dargestellten Ausführungsbeispiel als Energieabsorptionselement ausgebildet. Die Spindelmutter 10 ist drehbar in einem Gehäuse 13 gelagert und trägt ein Außengewinde 14, durch das die Spindelmutter 10 über ein vereinfacht dargestelltes Untersetzungsgetriebe 15 durch den Motor 6 in Drehung versetzt wird. Das Gehäuse 13 umhüllt hier gleichzeitig auch das Untersetzungsgetriebe 15.

Durch das Drehen der Spindelmutter 10 wirkt diese mittels ihres Innengewindes 11 verschiebend auf die Gewindespindel 8 ein, wobei der Teleskopabschnitt 4 in den Teleskopabschnitt 3 eingeschoben oder aus diesem herausverschoben wird.

Das Gehäuse 13, welches die Spindelmutter 10 abstützt, ist selbst an zwei in Längsrichtung der Gewindespindel 8 seitlichen, am Teleskopabschnitt 3 festliegenden Energieabsorptionselementen 16 und 17 befestigt, die jeweils eine Durchgangsbohrung 18 für die Gewindespindel 8 aufweisen. Bei einem Crash mit in das Mantelrohr 1 vom Lenkrad oder aus der Gegenrichtung vom Lenkgetriebe eingeleiteten Aufprallkräften, die durch die Belastung der Teleskopabschnitte 3, 4 derart auf den Spindeltrieb 7 einwirken, daß die Gewindespindel 8 schiebend oder ziehend auf die Spindelmutter 10 einwirkt, und diese beginnt, ihre Lage zum Teleskopabschnitt 3 zu verändern, drückt bzw. zieht das Gehäuse 13 an den Energieabsorptionselementen 16, 17, welche dadurch verformt werden. Auch ein einzelnes Energieabsorptionselement kann für den notwendigen Energieabbau ausreichend sein. Die Energieabsorptionselemente 16, 17, die hier nur vereinfacht dargestellt sind, sind gezielt für diese Belastung bzw. für diese Verformung, die dem Aufprallenergieabbau dient, ausgebildet. So könnte für sie z.B. ein bei dieser Belastung mit einem gewissen Widerstand fließendes Material gewählt werden, oder aber deren Körperform wird speziell für die Umformung vorgesehen. Tauglich sind hierfür z.B. sogenannte Wellrohre oder Streckmetalle, oder Tubenrohre, die sich umstülpen lassen. Weiterhin wäre als Energieabsorptionselement 16, 17 auch ein Stoßdämpfer einsetzbar.

Grundsätzlich lassen sich derartige Energieabsorptionselemente überall der Spindelmutter oder der Gewindespindel zuordnen, wo eine Nachgiebigkeit eines dieser Teile bei der Crashbelastung erwartet wird. Günstig für die Kraftübertragung und Energieumwandlung sind die ruhenden Lagerstellen des Spindeltriebs und darüberhinaus auch der unverschiebbare Teleskopabschnitt 3, der für die Abstützung der Energieabsorptionselemente eine hohe Haltekraft aufweist.

## Patentansprüche

1. Längsverstellvorrichtung an einem Mantelrohrteleskop einer Lenkspindel in einem Kraftfahrzeug, mit einem Spindeltrieb, der eine in Längsrichtung außen am Mantelrohr verlaufende Gewindespindel aufweist, die an einem ersten Teleskopabschnitt abgestützt ist und mit ihrem Gewinde in eine Spindelmutter eingreift, die an einem koaxial zum ersten Teleskopabschnitt angeordneten zweiten Teleskopabschnitt abgestützt ist,
**dadurch gekennzeichnet,**
daß mindestens an einem der Teleskopabschnitte (3, 4) mindestens ein Energieabsorptionselement (16, 17) festgelegt ist, das bei einer Bewegung, insbesondere Axialbewegung, der Gewindespindel (8) und/oder der Spindelmutter (10) relativ zum jeweils abstützenden Teleskopabschnitt (4 bzw. 3) durch zumindest eines dieser Teile (8, 10) des Spindeltriebs (7) beaufschlagt wird.

2. Längsverstellvorrichtung nach Anspruch 1,
**dadurch gekennzeichnet,**
daß das Energieabsorptionselement (16, 17) so beschaffen ist, daß es sowohl Druck- als auch Zugkräfte absorbieren kann.

3. Längsverstellvorrichtung nach Anspruch 1,
**dadurch gekennzeichnet,**
daß das Energieabsorptionselement (16, 17) eine für eine gezielte Verformung ausgebildete Körperform aufweist.

4. Längsverstellvorrichtung nach Anspruch 1,
**dadurch gekennzeichnet,**
daß das Energieabsorptionselement (16, 17) als Stoßdämpfer ausgebildet ist.

5. Längsverstellvorrichtung nach Anspruch 1,
**dadurch gekennzeichnet,**
daß die Spindelmutter (10) an dem wenigstens einen Energieabsorptionselement (16, 17) gelagert ist.

6. Längsverstellvorrichtung nach Anspruch 1,
**dadurch gekennzeichnet,**
daß die Spindelmutter (10) am äußeren, karosseriefesten Teleskopabschnitt (3) ortsfest gelagert ist.

## Claims

1. A longitudinal adjustment device on a jacket tube telescope on a steering gear shaft in a motor vehicle with a spindle drive which has a threaded spindle which runs in longitudinal direction outside the jacket tube and is supported on a first telescope section, the thread of which engages in a spindle nut which is supported on a second telescope section which is itself positioned coaxially in relation to the first telescope section,
**characterised in that,**
at least one energy absorption element (16, 17) is fixed to at least one of the telescope sections (3, 4) and that in the event of a movement, in particular an axial movement, of the threaded spindle (8) and/or the spindle nut (10) relative to the supporting telescope section (4/3), a force is applied to this element by at least one of these parts (8, 10) of the spindle drive (7).

2. A longitudinal adjustment device in accordance with Claim 1,
**characterised in that,**
the energy absorption element (16, 17) is designed in such a way that it can absorb both pressure and tractive forces.

3. A longitudinal adjustment device in accordance with Claim 1,
**characterised in that,**
the energy absorption element (16, 17) has a body shape designed for a specific deformation.

4. A longitudinal adjustment device in accordance with Claim 1,
**characterised in that,**
the energy absorption element (16, 17) is designed as a shock absorber.

5. A longitudinal adjustment device in accordance with Claim 1,
**characterised in that,**
the spindle nut (10) is connected to the at least one energy absorption element (16, 17).

6. A longitudinal adjustment device in accordance with Claim 1,
**characterised in that,**
the spindle nut (10) is fixed such that it cannot move to the outer telescope section which is in turn attached to the body.

## Revendications

1. Mécanisme de réglage longitudinal sur une enveloppe tubulaire télescopique d'un arbre de direction dans un véhicule automobile, avec une transmission à vis comportant une vis qui s'étend dans la direction longitudinale à l'extérieur de l'enveloppe tubulaire, et qui prend appui sur un premier tronçon télescopique et s'engage avec son filetage, dans un écrou de vis prenant appui sur un second tronçon télescopique agencé de manière coaxiale au premier tronçon télescopique,
caractérisé en ce que sur l'un au moins des tronçons télescopiques (3, 4) est fixé au moins un élément d'absorption d'énergie (16, 17), qui, lors d'un mouvement, notamment un mouvement axial, de la vis (8) et/ou de l'écrou de vis (10) par rapport au tronçon télescopique (4 et 3) réalisant respectivement l'appui, est sollicité par l'une au moins de ces pièces (8, 10) de la transmission à vis (7).

2. Mécanisme de réglage longitudinal selon la revendication 1, **caractérisé** en ce que l'élément d'absorption d'énergie (16, 17) est d'une conception telle, qu'il puisse absorber aussi bien des forces de compression que des forces de traction.

3. Mécanisme de réglage longitudinal selon la revendication 1, **caractérisé** en ce que l'élément d'absorption d'énergie (16, 17) présente un corps d'une forme conçue pour une déformation visée.

4. Mécanisme de réglage longitudinal selon la revendication 1, **caractérisé** en ce que l'élément d'absorption d'énergie (16, 17) est réalisé en tant qu'amortisseur.

5. Mécanisme de réglage longitudinal selon la revendication 1, caractérisé en ce que l'écrou de vis (10) est monté sur ledit au moins un élément d'absorption d'énergie (16, 17).

6. Mécanisme de réglage longitudinal selon la revendication 1, caractérisé en ce que l'écrou de vis (10) est monté en position fixe sur le tronçon télescopique extérieur (3), fixe avec la carrosserie.
